# EUROPEAN PATENT APPLICATION

(11) **EP 3 896 296 A1**
(43) Date of publication of application: **20.10.2021**
(21) Application number: 21168581.3
(22) Date of filing: 15.04.2021
(51) Int. Cl.: F16B 5/00, F16B 7/04, F16B 7/18, B62K 19/06, B62K 19/10, B62K 19/24

(54) **COUPLING DEVICE AND ALL-TERRAIN VEHICLE**

(30) Priority: 15.04.2020 CN 202020562495 U
(71) Applicant: Segway Technology Co., Ltd., Jiangsu 213000 (CN)
(72) Inventor: YUAN, Dong, Changzhou Jiangsu 213000 (CN); CHEN, Mingtang, Changzhou Jiangsu 213000 (CN)
(74) Representative: Zimmermann, Tankred Klaus

(57) **Abstract**

Embodiments of the present application disclose a coupling device and an all-terrain vehicle. The coupling device includes: a first coupling member including a first tube portion and a first solid portion coupled to the first tube portion; and a second coupling member including a second tube portion and a second solid portion coupled to the second tube portion. The second solid portion is detachably coupled to the first solid portion. In the coupling device of embodiments of the present application, the first coupling member includes the first tube portion, and the second coupling member includes the second tube portion, thereby greatly reducing the weight of the coupling device and transportation costs of the coupling device.

## Description

### FIELD

The present application relates to a coupling device and an all-terrain vehicle.

### BACKGROUND

Coupling devices are commonly used devices in all-terrain vehicles. In the all-terrain vehicle, tube members of the all-terrain vehicle are coupled by the coupling device. However, in the related art, the coupling device has a large weight, and the transportation cost of the coupling device is high.

### SUMMARY

In view of this, embodiments of the present application are intended to provide a coupling device and an all-terrain vehicle.

The present invention is defined in the independent claim 1, and the preferable features according to the present invention are defined in the dependent claims. Any embodiment in the present disclosure that does not fall within the scope of the present invention should be regarded as an example for understanding the present invention.

To this end, a technical solution of the present application is implemented such that:
Embodiments of the present application provide a coupling device including: a first coupling member including a first tube portion and a first solid portion coupled to the first tube portion; and a second coupling member including a second tube portion and a second solid portion coupled to the second tube portion. The second solid portion is detachably coupled to the first solid portion.

In some optional embodiments, the first solid portion has a first flat face and a first arc face, the first flat face is coupled to the first arc face; the first solid portion is coupled to a first region of an end face of the first tube portion, a second region of a first end face of the first tube portion has a second arc face coupled to the first flat face; the second solid portion has a second flat face and third arc face; the second flat face is coupled to the third arc face; the second solid portion is coupled to a third region of an end face of the second tube portion, a fourth region of the end face of the second tube portion has a fourth arc face coupled to the second flat face; and the second flat face is in contact with the first flat face, the first arc face is adjacent to the fourth arc face, and the second arc face is adjacent to the third arc face.

In some optional embodiments, the first solid portion has a first flat face and a third flat face; the first flat face is coupled to the third flat face; the first solid portion is coupled to a first region of an end face of the first tube portion, a second region of a first end face of the first tube portion has a fourth flat face coupled to the first flat face; the second solid portion has a second flat face and a fifth flat face; the second flat face is coupled to the fifth flat face; the second solid portion is coupled to a third region of an end face of the second tube portion, a fourth region of the end face of the second tube portion has a sixth flat face coupled to the second flat face; and the second flat face is in contact with the first flat face, the third flat face is adjacent to the sixth flat face, and the fourth flat face is adjacent to the fifth flat face.

In some optional implementations, the first solid portion has a first through hole, and the second solid portion has a second through hole; the coupling device further includes: a first fixing member and a second fixing member, the first fixing member passes through the first through hole and the second through hole, and is threadably fitted with the second fixing member.

In some optional implementations, a side wall of the first solid portion has a first groove, the first through hole is provided in the first groove, the first fixing member includes a head portion and a rod portion coupled to the head portion, the rod portion passes through the first through hole and the second through hole, and is threadably fitted with the second fixing member, and the head portion is located in the first groove.

In some optional implementations, a side wall of the second solid portion has a second groove, the second through hole is provided in the second groove, and the second fixing member is located in the first groove.

In some optional implementations, two first through holes are provided, the two first through holes are arranged in an axial direction of the first solid portion within the first groove, and correspondingly, two second through holes are provided, the two second through holes are arranged in an axial direction of the second solid portion within the second groove.

In some optional embodiments, the first flat face is provided with a first lightening slot; and/or, the second flat face is provided with a second lightening slot.

In some optional implementations, two first lightening slots are provided, the two first lightening slots are located at two sides of the first through hole respectively; and/or, two second lightening slots are provided, the two second lightening slots are located at two sides of the second through hole respectively.

Embodiments of the present application further provides an all-terrain vehicle including: a frame including a first tube member and a second tube member; and a coupling device according to the embodiments of the present application. The first tube member is coupled to the first tube portion, and the second tube member is coupled to the second tube portion.

The coupling device in the embodiments of the present application includes: a first coupling member including a first tube portion and a first solid portion coupled to the first tube portion; and a second coupling member including a second tube portion and a second solid portion coupled to the second tube portion. The second solid portion is detachably coupled to the first solid portion. The first coupling member includes the first tube portion, and the second coupling member includes the second tube portion, thereby greatly reducing the weight of the coupling device and transportation costs of the coupling device.

### BRIEF DESCRIPTION OF THE DRAWINGS

FIG. 1 is a sectional view of an optional structure of a coupling device according to an embodiment of the present application;
FIG. 2 is a schematic view of an optional structure of a coupling device according to an embodiment of the present application;
FIG. 3 is a schematic view of an optional structure of a first coupling member of a coupling device according to an embodiment of the present application;
FIG. 4 is a schematic view of an optional structure of a first coupling member of a coupling device according to an embodiment of the present application;
FIG. 5 is a sectional view of an optional structure of a coupling device according to an embodiment of the present application;
FIG. 6 is a schematic view of an optional structure of a frame of an all-terrain vehicle according to an embodiment of the present application;
FIG. 7 is a partially enlarged structural view of portion A in FIG. 6;
FIG. 8 is a schematic view of an optional structure of a frame of an all-terrain vehicle according to an embodiment of the present application;
FIG. 9 is a partially enlarged structural view of portion B in FIG. 8; and
FIG. 10 is a schematic view of an optional structure of a frame of an all-terrain vehicle according to an embodiment of the present application.

### DETAILED DESCRIPTION

The present application will be further described in detail below in combination the accompanying drawings and specific embodiments. It should be understood that, the specific embodiments described herein are only used to explain the present application, but not to limit the present application.

In the embodiments of the present application, it should be noted that, unless specified or limited otherwise, the term "coupled" is used broadly, and may be, for example, electrical connections; may also be inner communications of two elements; may also be direct connections or indirect connections via intervening structures; which can be understood by those skilled in the art according to specific situations.

It should be noted that, the terms "first\second\third" involved in the embodiments of the present application are merely used to distinguish similar objects, and do not represent a particular sort of the objects. It should be understood that, particular order and precedence sequence for the terms "first\second\third" can be exchanged if permitted. It should be understood that, the objects distinguished by "first\second\third" can be exchanged under appropriate circumstances, such that the embodiments of the present application described herein can be implemented in orders in addition to those illustrated or described herein.

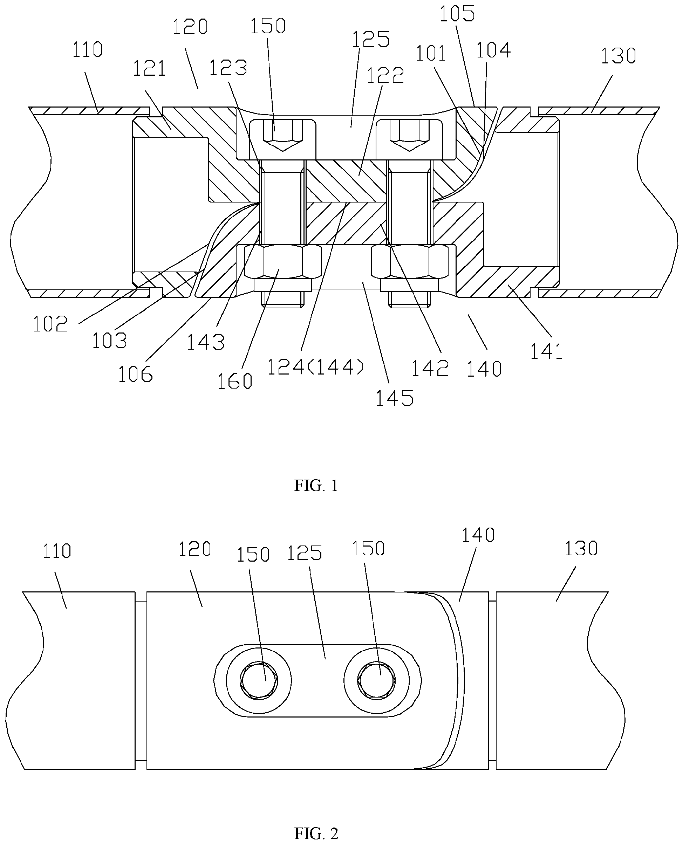

It should be noted that the embodiments in the present disclosure and the features in the embodiments may be combined with each other without conflict. A coupling device recited in embodiments of the present application will be described in detail below in combination with FIGS. 1 to 5.

The coupling device includes a first coupling member 120 and a second connecting member 140. The first coupling member 120 includes a first tube portion 121 and a first solid portion 122, the first solid portion 122 is coupled to the first tube portion 121. The second coupling member 140 includes a second tube portion 141 and a second solid portion 142, and the second solid portion 142 is coupled to the second tube portion 141. The second solid portion 142 is detachably coupled to the first solid portion 122. The first coupling member 120 includes the first tube portion 121, and the second coupling member 140 includes the second tube portion 141, thereby greatly reducing the weight of the coupling device and transportation costs of the coupling device.

In the embodiments of the present application, the first coupling member 120 includes the first tube portion 121 and the first solid portion 122. The first solid portion 122 is coupled to the first tube portion 121, and the first tube portion 121 and the first solid portion 122 have an integral structure.

Herein, the structure of the first tube portion 121 is not limited. By way of an example, the first tube portion 121 may be a straight tube, or may be a bent tube. By way of another example, the first tube portion 121 may be a circular tube, or may be a square tube.

Herein, the structure of the first solid portion 122 is not limited. By way of an example, the first solid portion 122 may have a plate-like structure.

In the embodiments of the present application, the second coupling member 140 includes the second tube portion 141 and the second solid portion 142. The second solid portion 142 is coupled to the second tube portion 141, and the second tube portion 141 and the second solid portion 142 have an integral structure.

Herein, the structure of the second tube portion 141 is not limited. By way of an example, the second tube portion 141 may be a straight tube, or may be a bent tube. By way of another example, the second tube portion 141 may be a circular tube, or may be a square tube.

Herein, the structure of the second solid portion 142 is not limited. By way of an example, the second solid portion 142 may have a plate-like structure.

Herein, implementations of detachable coupling of the first solid portion 122 and the second solid portion 142 are not limited. By way of an example, the detachable coupling of the first solid portion 122 and the second solid portion 142 can be achieved by a screw.

In some optional implementations of the embodiments of the present application, as illustrated in FIGS. 1 and 2, the first solid portion 122 has a first flat face 124 and a first arc face 101. The first flat face 124 is coupled to the first arc face 101. The first solid portion 122 is coupled to a first region of an end face of the first tube portion 121, a second region of the end face of the first tube portion 121 has a second arc face 102, and the second arc face 102 is coupled to the first flat face 124. The second solid portion 142 has a second flat face 144 and a third arc face 103. The second flat face 144 is coupled to the third arc face 103. The second solid portion 142 is coupled to a third region of an end face of the second tube portion 141, a fourth region of the end face of the second tube portion 141 has a fourth arc face 104, and the fourth arc face 104 is coupled to the second flat face 144. The second flat face 144 is in contact with the first flat face 124, the first arc face 101 is adjacent to the fourth arc face 104, and the second arc face 102 is adjacent to the third arc face 103. In an assembly process, when the first flat face 124 comes into contact with the second flat face 144, the first arc face 101 slides along the fourth arc face 104, and the second arc face 102 slides along the third arc face 103 to provide guiding effect for alignment of the first solid portion 122 and the second solid portion 142. Thus, difficulty for alignment and assembly of the first solid portion 122 and the second solid portion 142 is reduced, the first solid portion 122 and the second solid portion 142 can form a smooth contact therebetween, and mutual collision between the first solid portion 122 and the second solid portion 142 in the assembly process can be effectively avoided.

In the present implementation, the first arc face 101 is located at a distal end of the first solid portion 122, and the second arc face 102 is close to a coupling end of the first solid portion 122 and the first tube portion 121. That is, the first arc face 101 and the second arc face 102 are located at opposite ends of the first flat face 124.

In the present implementation, the third arc face 103 is located at a distal end of the second solid portion 142, and the fourth arc face 104 is close to a coupling end of the second solid portion 142 and the second tube portion 141. That is, the third arc face 103 and the fourth arc face 104 are located at opposite ends of the second flat face 144.

In the present implementation, the first arc face 101, the second arc face 102, the third arc face 103 and the fourth arc face 104 are each in a hided state.

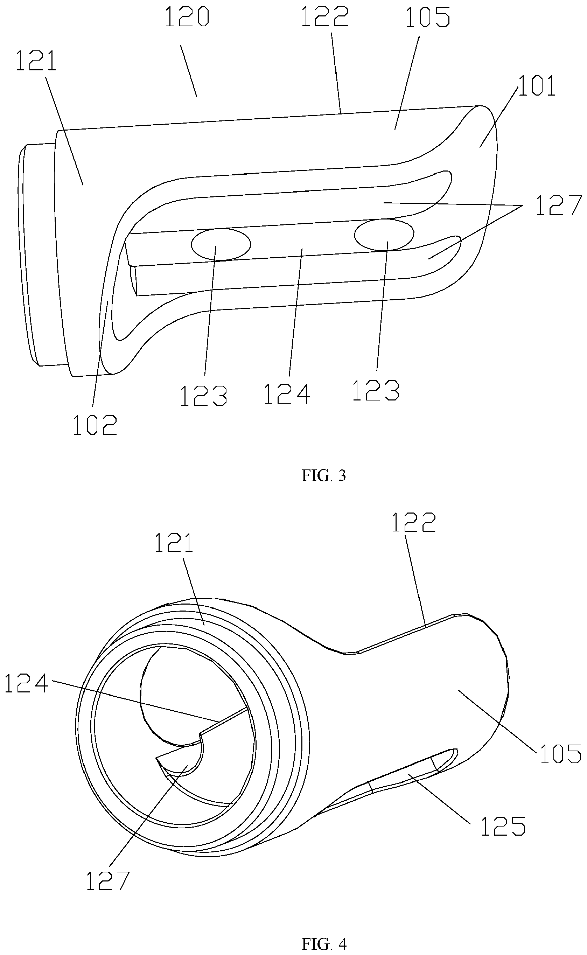

In the present implementation, as illustrated in FIGS. 3 and 4, the first solid portion 122 has a first outer surface 105. First set of opposite ends of the first outer surface 105 are coupled to two opposite ends of the first flat face 124 respectively, and second set of opposite ends of the first outer surface 105 are coupled to the first arc face 101 and an outer surface of the first tube portion 121 respectively. The first outer surface 105 is exposed.

Herein, one of the first set of opposite ends of the first outer surface 105 is coupled to one of the two opposite ends of the first flat face 124, and the other of the first set of opposite ends of the first outer surface 105 is coupled to the other of the two opposite ends of the first flat face 124.

Herein, one of the second set of opposite ends of the first outer surface 105 is coupled to the first arc face 101, and the other of the second set of opposite ends of the first outer surface 105 is coupled to the outer surface of the first tube portion 121.

Herein, the first outer surface 105 may be an arc face. Certainly, the first outer surface 105 may also be formed by coupling a plurality of flat faces.

In the present implementation, the second solid portion 142 has a second outer surface 106. First set of opposite ends of the second outer surface 106 are coupled to two opposite ends of the second flat face 144 respectively, and second set of opposite ends of the second outer surface 106 are coupled to the third arc face 103 and an outer surface of the second tube portion 141 respectively. The second outer surface 106 is exposed.

Herein, one of the first set of opposite ends of the second outer surface 106 is coupled to one of the two opposite ends of the second flat face 144, and the other of the first set of opposite ends of the second outer surface 106 is coupled to the other of the two opposite ends of the second flat face 144.

Herein, one of the second set of opposite ends of the second outer surface 106 is coupled to the third arc face 103, and the other of the second set of opposite ends of the second outer surface 106 is coupled to the outer surface of the second tube portion 141.

Herein, the second outer surface 106 may be an arc face. Certainly, the second outer surface 106 may also be formed by coupling a plurality of flat faces.

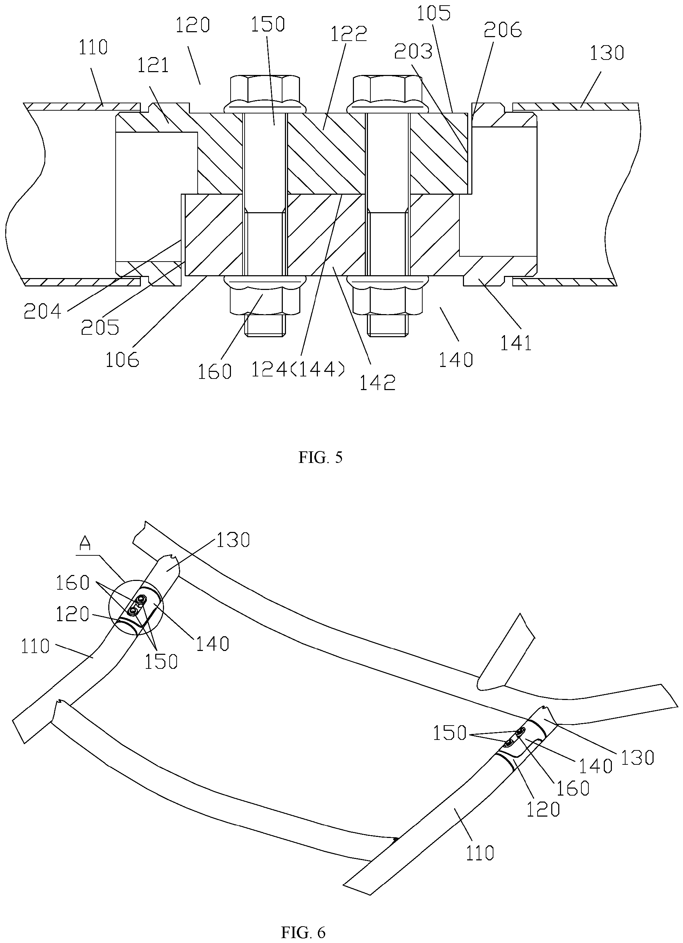

In some optional implementations of the embodiments of the present application, as illustrated in FIG. 5, the first solid portion 122 has a first flat face 124 and a third flat face 203. The first flat face 124 is coupled to the third flat face 203. The first solid portion 122 is coupled to a first region of an end face of the first tube portion 121, a second region of the end face of the first tube portion 121 has a fourth flat face 204, and the fourth flat face 204 is coupled to the first flat face 124. The second solid portion 142 has a second flat face 144 and a fifth flat face 205. The second flat face 144 is coupled to the fifth flat face 205. The second solid portion 142 is coupled to a third region of an end face of the second tube portion 141, a fourth region of the end face of the second tube portion 141 has a sixth flat face 206, and the sixth flat face 206 is coupled to the second flat face 144. The second flat face 144 is in contact with the first flat face 124, the third flat face 203 is adjacent to the sixth flat face 206, and the fourth flat face 204 is adjacent to the fifth flat face 205.

In the present implementation, the third flat face 203 is located at a distal end of the first solid portion 122, and the fourth flat face 204 is close to a coupling end of the first solid portion 122 and the first tube portion 121. That is, the third flat face 203 and the fourth flat face 204 are located at opposite ends of the first flat face 124.

In the present implementation, the fifth flat face 205 is located at a distal end of the second solid portion 142, and the sixth flat face 206 is close to a coupling end of the second solid portion 142 and the second tube portion 141. That is, the fifth flat face 205 and the sixth flat face 206 are located at opposite ends of the second flat face 144.

In the present implementation, the third flat face 203, the fourth flat face 204, the fifth flat face 205 and the sixth flat face 206 are each in a hided state.

In the present implementation, the first solid portion 122 has a first outer surface 105, and the second solid portion has a second outer surface 106. The first outer surface 105 and the second outer surface 106 have been described above, and will not be elaborated herein.

In some optional implementations of the embodiments of the present application, as illustrated in FIGS. 1 and 2, the first solid portion 122 has a first through hole 123, and the second solid portion 142 has a second through hole 143. The coupling device may further include a first fixing member 150 and a second fixing member 160. The first fixing member 150 passes through the first through hole 123 and the second through hole 142, and is threadably fitted with the second fixing member 160, such that the detachable coupling of the first solid portion 122 and the second solid portion 142 can be realized through the first fixing member 150 and the second fixing member 160.

In the present implementation, the structure of the first fixing member 150 is not limited. By way of an example, the first fixing member 150 may be a bolt.

In the present implementation, the structure of the second fixing member 160 is not limited. By way of an example, the first fixing member 160 may be a nut.

In the present implementation, the numbers of the first and second fixing members 150, 160 are not limited. By way of an example, as illustrated in FIGS. 1 and 2, two first fixing members 150 and two second fixing members 160 are provided. That is, the detachable coupling of the first solid portion 122 and the second solid portion 142 is realized through the two first fixing members 150 and the two second fixing members 160.

In the present implementation, as illustrated in FIG. 1, a side wall of the first solid portion 122 has a first groove 125, the first through hole 123 is provided in the first groove 125, the first fixing member 150 includes a head portion and a rod portion coupled to the head portion, the rod portion passes through the first through hole and the second through hole, and is threadably fitted with the second fixing member 160, and the head portion is located in the first groove 125. The head portion of the first fixing member 150 does not protrude from the first solid portion 122, such that loose coupling between the first fixing member 150 and the second fixing member 160 due to collision of foreign items and the head portion of the first fixing member 150 can be avoided. Meanwhile, the appearance of the coupling device can also be clean and tidy.

Certainly, the head portion of the first fixing member 150 may also protrude from the first solid portion 122.

In the present implementation, as illustrated in FIG. 1, a side wall of the second solid portion 142 has a second groove 145, the second through hole 143 is provided in the second groove 145, the second fixing member 160 is located in the second groove 125, and the second fixing member 160 does not protrude from the second solid portion 142, such that loose coupling between the first fixing member 150 and the second fixing member 160 due to collision of foreign items and the second fixing member 160 can be avoided. Meanwhile, the appearance of the coupling device can also be clean and tidy.

Herein, an end portion of the first fixing member 150 may also protrude from the second solid portion 142, as illustrated in FIG. 1. Certainly, the end portion of the first fixing member 150 may also do not protrude from the first solid portion 142.

Certainly, the second fixing member 160 may also protrude from the first solid portion 142.

In the present implementation, two first through holes 123 may be provided, the two first through holes 123 are arranged in an axial direction of the first solid portion 122 within the first groove 125, and correspondingly, two second through holes 143 may be provided, the two second through holes 143 are arranged in an axial direction of the second solid portion within the second groove, thereby enhancing coupling strength of the first solid portion 122 and the second solid portion 142.

In the present implementation, when the first solid portion 122 has the first flat face 124 and the second solid portion 142 has the second flat face 144, the first flat face 124 may be provided with a first lightening slot 127, as illustrated in FIGS. 3 and 4; and/or, the second flat face 144 may be provided with a second lightening slot. That is, the first flat face 124 and the second flat face 144 may each be provided with a lightening slot; or one of the first flat face 124 and the second flat face 144 is provided with a lightening slot, facilitating a decrease in the weight of the coupling device.

Herein, the arranged position and the numbers of the first lightening slots 127 are not limited.

By way of an example, two first lightening slots 127 are provided, the two first lightening slots 127 are located at two sides of the first through hole 123 respectively.

Herein, the arranged position and the numbers of the second lightening slots are not limited.

By way of an example, two second lightening slots are provided, the two second lightening slots are located at two sides of the second through hole 143 respectively.

Certainly, the coupling device may be provided with two first lightening slots 127 and two second lightening slots at the same time, the two first lightening slots 127 are located at two sides of the first through hole 123 respectively, and the two second lightening slots are located at two sides of the second through hole respectively, thereby enhancing the coupling strength between the first solid portion 122 and the second solid portion 142, and reducing the weight of the coupling device.

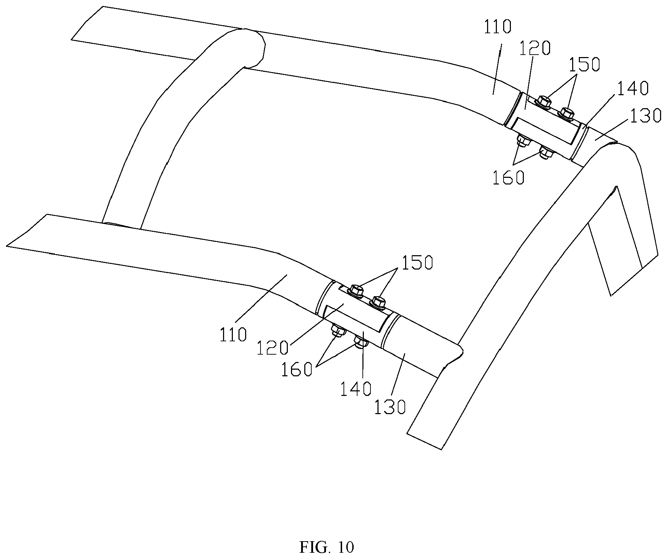

Embodiments of the present application further recites an all-terrain vehicle including: a frame including a first tube member and a second tube member; and a coupling device according to the embodiments of the present application, as illustrated in FIGS. 6, 8 and 10. The first tube member 110 is coupled to the first tube portion 121, and the second tube member 130 is coupled to the second tube portion 141. The first coupling member 120 includes the first tube portion 121, and the second coupling member 140 includes the second tube portion 141, thereby greatly reducing the weight of the frame and the weight of the all-terrain vehicle.

Herein, the structure of the first tube member 110 is not limited. By way of an example, the first tube member may be a straight tube, or may be a bent tube. By way of another example, the first tube member may be a circular tube, or may be a square tube.

Herein, implementations of the coupling between the first tube portion 121 and the first tube member 110 are not limited. By way of an example, the first tube portion 121 and the first tube member 110 are coupled by welding.

In the embodiments of the present application, the structure of the second tube member 130 is not limited. By way of an example, the second tube member may be a straight tube, or may be a bent tube. By way of another example, the second tube member may be a circular tube, or may be a square tube.

Herein, implementations of the coupling between the second tube portion 141 and the second tube member 130 are not limited. By way of an example, the second tube portion 141 and the second tube member 130 are coupled by welding.

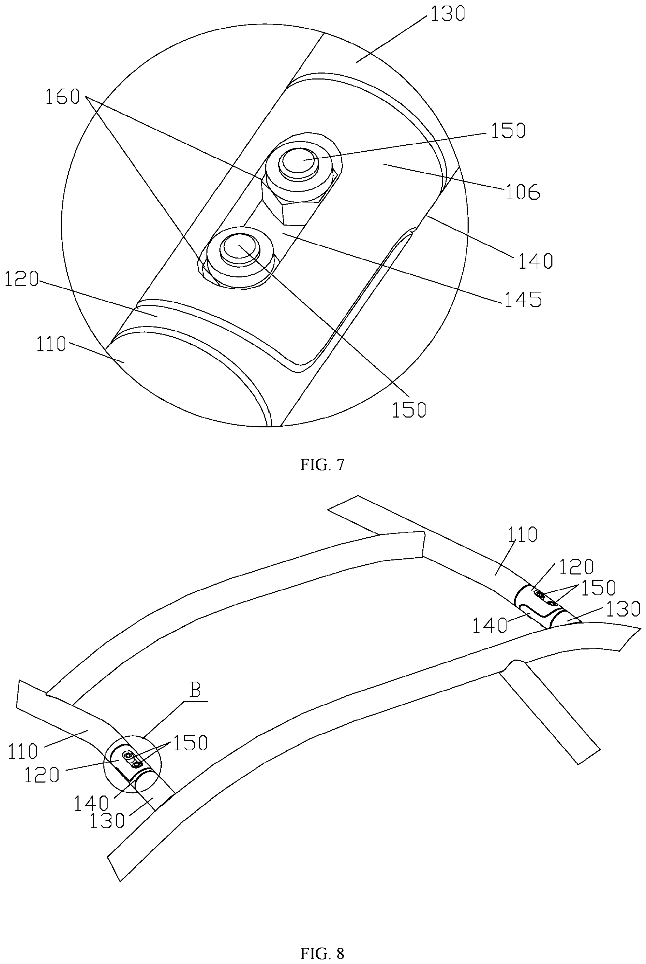

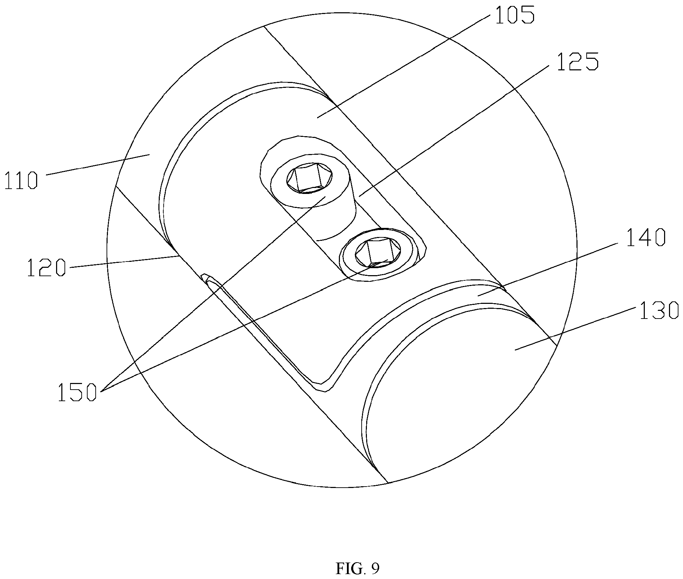

In the embodiments of the present application, the numbers of the first and second tube members 110, 130 are not limited. By way of an example, as illustrated in FIGS. 6 and 8, the frame may include two first tube members 110 and two second tube members 130. The first tube member 110 and the second tube member 130 are detachably coupled through the first coupling member 120 and the second coupling member 140. Herein, as illustrated in FIGS. 7 and 9, the detachable coupling between the first coupling member 120 and the second coupling member 140 are realized through the first fixing member 150 and the second fixing member 160.

The above-described are merely specific implementations of the present application, but the protection scope of the present application is not limited to this. The conceivable change or alternative by those skilled in the art within the technical scope disclosed by the present application should be covered in the protection scope of the present application. Therefore, the protection scope of the present application is subject to the protection scope of the claims.

## Claims

1. A coupling device, comprising:
a first coupling member (120) comprising a first tube portion (121) and a first solid portion (122) coupled to the first tube portion (121); and
a second coupling member (140) comprising a second tube portion (141) and a second solid portion (142) coupled to the second tube portion (141);
wherein the second solid portion (142) is detachably coupled to the first solid portion (122).

2. The coupling device according to claim 1, wherein
the first solid portion (122) has a first flat face (124) and a first arc face (101), the first flat face (124) is coupled to the first arc face (101);
the first solid portion (122) is coupled to a first region of an end face of the first tube portion (121), a second region of the end face of the first tube portion (121) has a second arc face (102) coupled to the first flat face (124);
the second solid portion (142) has a second flat face (144) and third arc face (103); the second flat face (144) is coupled to the third arc face (103);
the second solid portion (142) is coupled to a third region of an end face of the second tube portion (141), a fourth region of the end face of the second tube portion (141) has a fourth arc face (104) coupled to the second flat face (144); and
the second flat face (144) is in contact with the first flat face (124), the first arc face (101) is adjacent to the fourth arc face (104), and the second arc face (102) is adjacent to the third arc face (103).

3. The coupling device according to claim 2, wherein the first arc face (101) and the second arc face (102) are located at opposite ends of the first flat face (124); and/or,
the third arc face (103) and the fourth arc face (104) are located at opposite ends of the second flat face (144).

4. The coupling device according to claim 2 or 3, wherein the first arc face (101), the second arc face (102), the third arc face (103) and the fourth arc face (104) are each in a hided state.

5. The coupling device according to any one of claims 2 to 4, wherein the first solid portion (122) has a first outer surface (105), first set of opposite ends of the first outer surface (105) are coupled to two opposite ends of the first flat face (124) respectively, and second set of opposite ends of the first outer surface (105) are coupled to the first arc face (101) and an outer surface of the first tube portion (121) respectively; and/or,
the second solid portion (142) has a second outer surface (106), first set of opposite ends of the second outer surface (106) are coupled to two opposite ends of the second flat face (144) respectively, and second set of opposite ends of the second outer surface (106) are coupled to the third arc face (103) and an outer surface of the second tube portion (141) respectively.

6. The coupling device according to claim 1, wherein
the first solid portion (122) has a first flat face (124) and a third flat face (203); the first flat face (124) is coupled to the third flat face (203);
the first solid portion (122) is coupled to a first region of an end face of the first tube portion (121), a second region of the end face of the first tube portion (121) has a fourth flat face (204) coupled to the first flat face (124);
the second solid portion (142) has a second flat face (144) and a fifth flat face (205); the second flat face (144) is coupled to the fifth flat face (205);
the second solid portion (142) is coupled to a third region of an end face of the second tube portion (141), a fourth region of the end face of the second tube portion (141) has a sixth flat face (206) coupled to the second flat face (144); and
the second flat face (144) is in contact with the first flat face (124), the third flat face (203) is adjacent to the sixth flat face (206), and the fourth flat face (204) is adjacent to the fifth flat face (205).

7. The coupling device according to claim 6, wherein the third flat face (203) and the fourth flat face (204) are located at opposite ends of the first flat face (124); and/or,
the fifth flat face (205) and the sixth flat face (206) are located at opposite ends of the second flat face (144).

8. The coupling device according to claim 6 or 7, wherein the third flat face (203), the fourth flat face (204), the fifth flat face (205) and the sixth flat face (206) are each in a hided state.

9. The coupling device according to any one of claims 1 to 8, wherein the first solid portion (122) has a first through hole (123), and the second solid portion (142) has a second through hole (143);
the coupling device further comprises: a first fixing member (150) and a second fixing member (160), the first fixing member (150) passes through the first through hole (123) and the second through hole (143), and is threadably fitted with the second fixing member (160).

10. The coupling device according to claim 9, wherein a side wall of the first solid portion (122) has a first groove (125), the first through hole (123) is provided in the first groove (125), the first fixing member (150) comprises a head portion and a rod portion coupled to the head portion, the rod portion passes through the first through hole (123) and the second through hole (143), and is threadably fitted with the second fixing member (160), and the head portion is located in the first groove (125).

11. The coupling device according to claim 10, wherein a side wall of the second solid portion (142) has a second groove (145), the second through hole (143) is provided in the second groove (145), and the second fixing member (160) is located in the first groove (125).

12. The coupling device according to claim 11, wherein two first through holes (123) are provided, the two first through holes (123) are arranged in an axial direction of the first solid portion (122) within the first groove (125), and correspondingly, two second through holes (143) are provided, the two second through holes (143) are arranged in an axial direction of the second solid portion (142) within the second groove (145).

13. The coupling device according to claim 11 or 12, wherein the first flat face (124) is provided with a first lightening slot (127); and/or, the second flat face (144) is provided with a second lightening slot.

14. The coupling device according to claim 13, wherein two first lightening slots (127) are provided, the two first lightening slots (127) are located at two sides of the first through hole (123) respectively; and/or,
two second lightening slots are provided, the two second lightening slots are located at two sides of the second through hole (143) respectively.

15. An all-terrain vehicle, comprising: a frame comprising a first tube member (110) and a second tube member (130); and a coupling device according to any one of claims 1 to 14;
wherein the first tube member (110) is coupled to the first tube portion (121), and the second tube member (130) is coupled to the second tube portion (141).
